# DEMANDE DE BREVET EUROPEEN

(11) **EP 2 112 026 A1**
(43) Date de publication de la demande: **28.10.2009**
(21) Numéro de dépôt: 09158286.6
(22) Date de dépôt: 20.04.2009
(51) Int. Cl.: B60R 13/07, B60S 1/48, B62D 25/08

(54) **Ensemble de récupération d'eau provenant d'un pare-brise et d'une grille d'auvent d'un véhicule automobile**

(30) Priorité: 22.04.2008 FR 0852699
(71) Demandeur: Peugeot Citroën Automobiles SA, 78140 Vélizy-Villacoublay (FR); Trelleborg Reims, 51420 Witry Les Reims (FR)
(72) Inventeur: Musement, Eric, 78990, ELANCOURT (FR); Conseil, Florent, 02160, Guyencourt (FR)
(74) Mandataire: Jacobson, Claude

(57) **Abrégé**

L'invention concerne un ensemble de récupération d'eau, du type comprenant une boîte à eau (10) montée sur un élément (1) de structure de caisse du véhicule au-dessous d'une grille d'auvent. La boîte à eau (10) comporte une paroi périphérique (11) de fixation sur l'élément (1) et un fond (15) dont au moins une partie forme un clapet (20) d'évacuation de l'eau. La paroi périphérique (11) comporte au moins un conduit (25) traversant le fond (15) et de raccordement à un tuyau d'alimentation en liquide d'un système lave-vitre.

## Description

La présente invention concerne un ensemble de récupération d'eau provenant d'un pare-brise et d'une grille d'auvent d'un véhicule automobile.

L'invention concerne également un véhicule automobile équipé d'un tel ensemble de récupération d'eau.

De manière classique, les véhicules automobiles comportent entre un pare-brise et un capot de fermeture d'un compartiment moteur, une grille d'auvent ayant notamment pour rôle de capter l'air d'alimentation d'un système de climatisation du véhicule.

Les véhicules automobiles sont actuellement équipés d'un ensemble de récupération de l'eau disposé au-dessous d'une partie latérale de la grille d'auvent et dont le rôle est de récupérer l'eau ruisselant du pare-brise lors de fortes pluies ou du lavage du véhicule et d'évacuer cette eau vers le bas dudit véhicule.

L'ensemble de récupération est le plus souvent formé par une boîte à eau montée sur un élément de la structure de caisse du véhicule au-dessous de la grille d'auvent.

Pour canaliser l'eau et l'évacuer, le fond de la boîte à eau peut être relié à un conduit qui traverse le compartiment moteur ou équipé d'un clapet d'obturation articulé sur le fond et qui s'ouvre lorsque le poids de l'eau accumulée dépasse une valeur prédéterminée.

Par ailleurs, les véhicules automobiles sont également pourvus d'un système lave-vitre comportant au moins un orifice d'aspersion sur le pare-brise d'un liquide lave-vitre contenu dans un réservoir placé sous le capot avant dans le compartiment moteur ou bien dans un passage de roue avant.

Certains véhicules automobiles sont aussi pourvus d'au moins un orifice d'aspersion de la lunette arrière.

Pour relier ces orifices d'aspersion au réservoir, il faut faire passer dans la structure de caisse du véhicule, un ou plusieurs tuyaux de liaison.

Ces différents tuyaux doivent donc traverser par des trous, la tôle des éléments de la structure de caisse.

A cet effet, au niveau de chaque trou, le tuyau est protégé par un passe-gaine ce qui augmente les temps de montage.

De plus, les trous ainsi pratiqués dans les éléments de la structure de caisse sont des sources de corrosion et également la cause d'une propagation des bruits, notamment des bruits du moteur, vers l'habitacle.

Un des objectifs des constructeurs de véhicules automobiles réside dans une limitation, autant que possible, des trous pratiqués dans les éléments de la structure de caisse, notamment pour les tuyaux du système lave-vitre.

L'invention a donc pour objet un ensemble de récupération d'eau provenant d'un pare-brise et d'une grille d'auvent d'un véhicule automobile, du type comprenant une boîte à eau montée sur un élément de structure de caisse du véhicule au-dessous de la grille d'auvent, **caractérisé en ce que** ladite boîte à eau comporte une paroi périphérique de fixation sur l'élément de structure et un fond dont au moins une partie forme un clapet d'évacuation de l'eau, ladite paroi périphérique comportant au moins un conduit traversant le fond et de raccordement à un tuyau d'alimentation en liquide d'un système lave-vitre.

Selon d'autres caractéristiques de l'invention :
- le fond comporte une première partie formant ledit clapet déplaçable entre une position fermée et une position ouverte pour l'évacuation de l'eau et une seconde partie fixe traversée par le conduit de raccordement,
- le fond présente la forme d'une cuvette,
- le conduit de raccordement est monté dans un passage cylindrique ménagé dans la paroi périphérique,
- le passage cylindrique est à cheval sur la paroi périphérique,
- le conduit de raccordement comporte un embout supérieur d'emboîtement d'une première portion du tuyau d'alimentation et un embout inférieur d'emboîtement d'une seconde portion dudit tuyau d'alimentation,
- le conduit de raccordement est emmanché à force dans le passage,
- le conduit de raccordement est collé dans le passage, et
- le conduit de raccordement est venu de matière avec la paroi périphérique.

L'invention a également pour objet un véhicule automobile, **caractérisé en ce qu**'il comporte un ensemble de récupération d'eau provenant d'un pare-brise et d'une grille d'auvent, tel que précédemment défini.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique en perspective d'un élément de la structure de caisse d'un véhicule automobile, équipé d'un ensemble de récupération d'eau, conforme à l'invention,
- la Fig. 2 est une vue schématique en perspective de dessus de l'ensemble de récupération d'eau, et
- la Fig. 3 est une vue schématique en perspective de dessous de l'ensemble de récupération d'eau.

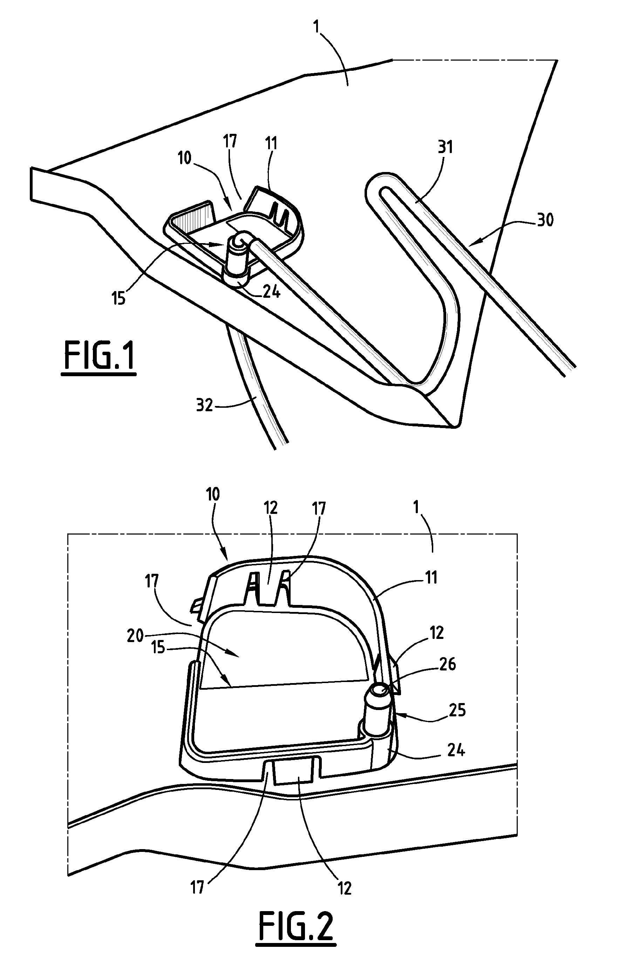

Sur la Fig. 1, on a représenté schématiquement un élément 1 d'une structure de caisse d'une partie avant d'un véhicule automobile.

Cet élément 1 constitué par exemple par un passage de roue avant est disposé en partie au-dessous d'une grille d'auvent, non représentée, prolongeant un pare-brise, non représenté également.

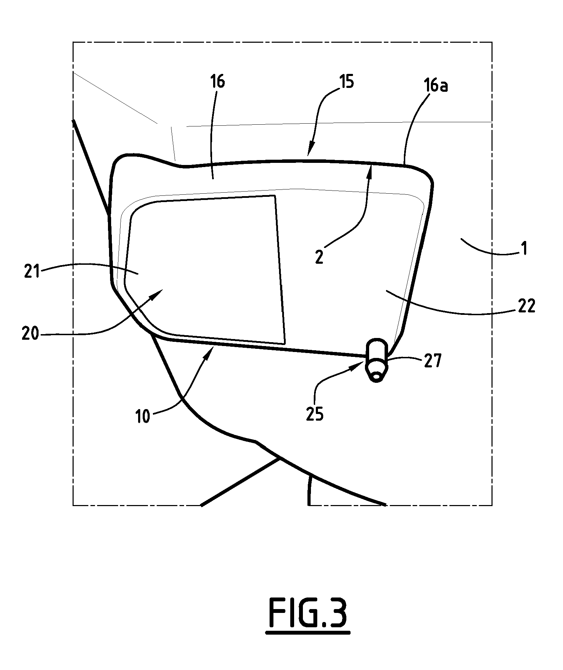

L'élément 1 est équipé d'un ensemble de récupération d'eau provenant du pare-brise et de la grille d'auvent. Cet ensemble comprend une boîte à eau désignée par la référence générale 10, montée sur une ouverture 2 (Fig. 3) ménagée dans l'élément 1.

Ainsi que montré à la Fig. 2, la boîte à eau 10 comporte une paroi périphérique 11 ayant en section droite, un profil identique à celui de l'orifice 2 afin de pouvoir s'encastrer dans cet orifice 2 au moyen de parties déformables 12 à face inclinée qui permettent de fixer par encliquetage la paroi périphérique 11 de la boîte à eau 10 après encastrement dans l'ouverture 2.

La boîte à eau 10 comporte également un fond désigné dans son ensemble par la référence 15, porté par la paroi périphérique 11 qui forme un corps de support.

La paroi périphérique 11 est réalisée en un matériau rigide, comme par exemple une matière plastique rigide, et le fond 15 solidaire de cette paroi périphérique 11 est réalisé en un matériau plus souple, comme par exemple du caoutchouc.

Comme montré à la Fig. 3, le fond 15 de la boîte à eau 10 comporte une lèvre périphérique 16 destinée à venir s'appliquer contre la face inférieure de l'élément 1. Ainsi, le fond 15 présente la forme d'une cuvette de telle manière qu'après encastrement de la paroi tubulaire 11 dans l'orifice 2 de cet élément 1, le bord supérieur 16a de la lèvre périphérique 16 est maintenu appliqué contre la face inférieure dudit élément 1 en entourant l'ouverture 2. La paroi périphérique 11 comporte des ouvertures 17 afin de permettre à l'eau s'écoulant sur l'élément 1 de pénétrer dans la boîte à eau 10 et plus particulièrement dans la cuvette du fond 15.

Comme cela apparaît sur les Figs. 2 et 3, le fond 15 comporte au moins une partie qui détermine un clapet 20 d'évacuation de l'eau déversée dans la boîte à eau 10.

Plus particulièrement, le fond 15 comporte une première partie 21 formant ledit clapet 20 déplaçable entre une position fermée et une position ouverte pour l'évacuation de l'eau et une seconde partie fixe 22.

Ainsi, la première partie 21 se plie vers le bas lorsque la charge de l'eau recueillie dans la cuvette déterminée par le fond 15 dépasse une certaine limite, permettant ainsi l'évacuation de l'eau par effet de clapet. Après évacuation de l'eau, la partie avant 21 reprend sa position initiale sensiblement dans le prolongement de la seconde partie 22 du fond 15.

De façon avantageuse, la paroi périphérique 11 de la boîte à eau 10 comporte au moins un conduit 25 traversant le fond 15. Ce conduit 25 est destiné au raccordement d'un tuyau 30 d'alimentation en liquide d'un système lave-vitre avant et/ou arrière, non représenté.

Le conduit de raccordement 25 est monté dans un passage cylindrique 24 ménagé dans la paroi périphérique 11 et, de préférence, à cheval sur cette paroi périphérique de façon à ne pas perturber le fonctionnement du clapet 20.

Le conduit 25 de raccordement comporte un embout supérieur 26 (Fig. 2) d'emboîtement d'une première portion 31 (Fig. 1) du tuyau d'alimentation 30 et un embout inférieur 27 (Fig. 3) d'emboîtement d'une seconde portion 32 (Fig. 1) dudit tuyau d'alimentation 30. Chaque portion, respectivement 31 et 32, du tuyau d'alimentation 30 comporte à cet effet un raccord étanche, de type connu, non représenté destiné à coopérer avec l'embout, respectivement 26 et 27, du conduit de raccordement 25.

Après montage de la boîte à eau 10 sur l'élément 1 de la structure de caisse du véhicule, les deux parties, respectivement 31 et 32, du tuyau d'alimentation 30 peuvent être facilement montées sur l'embout, respectivement supérieur 26 et inférieur 27 correspondant du conduit de raccordement 25.

Le conduit de raccordement 25 est emmanché à force dans le passage 24 ou collé dans ce passage 24.

Selon une variante, le conduit de raccordement 25 est venu de matière avec le passage 24 de la paroi périphérique 11 de la boîte à eau 10.

Selon une variante, plusieurs conduits de raccordement 25 peuvent être ménagés dans la boîte à eau 10 au niveau de la seconde partie fixe 22 du fond 15 de ladite boîte à eau 10.

L'ensemble de récupération d'eau selon l'invention évite donc le perçage d'un trou dans l'élément 1 de structure de caisse du véhicule pour le passage du tuyau d'alimentation en liquide d'un système lave-vitre.

Bien entendu, l'invention ne se limite pas aux détails du mode de réalisation qui vient d'être décrit à titre d'exemple et, en particulier, pourrait être adaptée à d'autres types de clapet.

## Revendications

1. Ensemble de récupération d'eau provenant d'un pare-brise et d'une grille d'auvent d'un véhicule automobile, du type comprenant une boîte à eau (10) montée sur un élément (1) de structure de caisse du véhicule au-dessous de la grille d'auvent, **caractérisé en ce que** ladite boîte à eau (10) comporte une paroi périphérique (11) de fixation sur l'élément (1) de structure et un fond (15) dont au moins une partie (21) forme un clapet (20) d'évacuation de l'eau, ladite paroi périphérique (11) comportant au moins un conduit (25) traversant le fond (15) et de raccordement à un tuyau (30) d'alimentation en liquide d'un système lave-vitre.

2. Ensemble selon la revendication 1, **caractérisé en ce que** le fond (15) comporte une première partie (21) formant ledit clapet (20) déplaçable entre une position fermée et une position ouverte pour l'évacuation de l'eau et une seconde partie fixe (22), traversée par le conduit de raccordement (25).

3. Ensemble selon la revendication 1 ou 2, **caractérisé en ce que** le fond (15) présente la forme d'une cuvette.

4. Ensemble selon l'une quelconque des revendications 1 à 3, **caractérisé en ce que** le conduit de raccordement (25) est monté dans un passage cylindrique (24) ménagé dans la paroi périphérique (11).

5. Ensemble selon la revendication 4, **caractérisé en ce que** le passage cylindrique (24) est à cheval sur la paroi périphérique (11).

6. Ensemble selon l'une quelconque des revendications 1 à 5, **caractérisé en ce que** le conduit de raccordement (25) comporte un embout supérieur (26) d'emboîtement d'une première portion (31) du tuyau d'alimentation (30) et un embout inférieur (27) d'emboîtement d'une seconde portion (32) dudit tuyau d'alimentation (30).

7. Ensemble selon l'une quelconque des revendications 1 à 6, **caractérisé en ce que** le conduit de raccordement (25) est emmanché à force dans le passage (24).

8. Ensemble selon l'une quelconque des revendications 1 à 6, **caractérisé en ce que** le conduit de raccordement (25) est collé dans le passage (24).

9. Ensemble selon l'une quelconque des revendications 1 à 6, **caractérisé en ce que** le conduit de raccordement (25) est venu de matière avec le passage (24).

10. Véhicule automobile, **caractérisé en ce qu'**il comporte un ensemble de récupération d'eau provenant d'un pare-brise et d'une grille d'auvent, selon l'une quelconque des revendications précédentes.
